# FASCICULE DE BREVET EUROPEEN

(11) **EP 3 572 635 B1**
(45) Date de publication et mention de la délivrance du brevet: **03.03.2021**
(21) Numéro de dépôt: 19175184.1
(22) Date de dépôt: 17.05.2019
(51) Int. Cl.: F01P 11/02, F16L 55/07

(54) **DISPOSITIF D'EVACUATION DE FLUIDE POUR CONTENANT DE FLUIDE**
VORRICHTUNG ZUM ABLASSEN VON FLÜSSIGKEIT FÜR FLÜSSIGKEITSBEHÄLTER
FLUID DRAINAGE DEVICE FOR FLUID CONTAINER

(30) Priorité: 25.05.2018 FR 1854427
(43) Date de publication de la demande: 27.11.2019
(73) Titulaire: RENAULT s.a.s., 92100 Boulogne-Billancourt (FR)
(72) Inventeur: PETILLON, Yohann, 78470 Saint-Rémy-lès-Chevreuse (FR); LE BOULCH, Philippe, 92130 Issy-Les-Moulineaux (FR)

(56) Documents cités:
- EP-A1- 0 715 113
- US-A1- 2016 084 386
- US-A1- 2016 341 103

## Description

L'invention se rapporte à un dispositif d'évacuation de fluide pour un contenant de fluide installé, par exemple, dans un véhicule automobile. Plus particulièrement, l'invention se rapporte à un dispositif d'évacuation de fluide comprenant un corps principal communiquant avec le contenant de fluide et fermé par une vis d'obturation.

Il est connu des dispositifs d'évacuation de fluide installés dans un circuit de refroidissement d'un véhicule automobile. Ces dispositifs sont conçus pour chasser de l'air infiltré dans le circuit de refroidissement. De tels dispositifs sont encore appelés dispositifs de purge.

Les dispositifs d'évacuation de fluide sont prévus également pour un carter d'huile du véhicule. Dans ce cas, les dispositifs d'évacuation de fluide sont conçus pour évacuer de l'huile contenue dans le carter d'huile lors de la vidange de celui-ci. De tels dispositifs sont encore appelés dispositif de vidange.

Quel que soit l'endroit où sont installés les dispositifs d'évacuation de fluide, ils ont tous la même fonction qui est de laisser évacuer du fluide en dehors du contenant sur lequel ils sont montés : de l'air dans le cas du dispositif de purge et de l'huile dans le cas du dispositif de vidange. Le contenant de fluide désigne le conduit de fluide du circuit de refroidissement ou le carter d'huile du moteur.

Le dispositif de purge et le dispositif de vidange présentent généralement une structure similaire. Ils comprennent un corps principal creux, souvent de section cylindrique. Ce corps principal, encore appelé fût, communique avec le contenant de fluide et débouche vers l'extérieur. Les dispositifs comprennent en outre un obturateur qui vient fermer le corps principal pendant le fonctionnement du moteur. En revanche, pendant la phase de purge ou de vidange, l'obturateur est enlevé, ce qui permet l'évacuation du fluide vers l'extérieur via une extrémité ouverte du corps principal.

De manière classique, le corps principal creux comprend un taraudage et l'obturateur est une vis filetée. De cette manière, l'obturateur, ou encore appelé la vis d'obturation, coopère avec le corps principal par vissage.

Un tel dispositif est montré dans le document US 2016/0084386 A1.

Cependant, on a constaté que dans de tels dispositifs d'évacuation de fluide connus, l'obturateur peut être perdu facilement après l'entretien, à savoir la purge ou la vidange.

En effet, dans certains modèles du dispositif d'évacuation, il faut dévisser complètement la vis d'obturation pour libérer la sortie de fluide. La vis est donc séparée du corps principal. Un opérateur en charge de l'entretien va probablement mettre la vis d'obturation de côté pour pouvoir librement entreprendre les étapes suivantes de l'entretien. Il arrive que l'opérateur oublie l'endroit où il a mis la vis ou que celle-ci se perde au milieu des autres outils ou pièces de rechange. Par conséquent, l'opérateur ne retrouve plus la vis d'obturation pour pouvoir fermer le corps principal. Il arrive également que la vis soit difficilement accessible, voire accessible uniquement en aveugle, et nécessite l'utilisation d'un outil dédié, tel un tournevis par exemple, pour son retrait. Le risque de perte de la vis d'obturation est alors augmenté lorsqu'elle est totalement dévissée.

Par ailleurs, le dispositif d'évacuation, qui comprend une vis coopérant avec un embout percé et taraudé, présente un risque de perte de la vis aussi en temps normal, notamment pendant le fonctionnement du moteur. En effet, la vis peut toujours se défaire après un certain nombre de rotations. Par conséquent, la vis d'obturation filetée peut remonter vers la sortie du corps principal à cause des vibrations du moteur. Ce déplacement de la vis risque de la faire sortir complètement du corps principal, entraînant une perte de ladite vis.

Ainsi, un des objectifs de l'invention est de proposer un dispositif d'évacuation de fluide qui ne présente pas de risque de perte d'obturateur pendant l'entretien ainsi qu'en temps normal.

A cet effet, l'invention concerne un dispositif d'évacuation de fluide pour contenant de fluide comprenant
- un corps principal creux destiné à être rapporté sur le contenant de fluide, ledit corps principal comprenant une chambre d'écoulement et une ouverture taraudée une ouverture taraudée communiquant avec ladite chambre d'écoulement et destinée à déboucher dans le contenant de fluide;
- un canal d'évacuation de fluide;
- une vis d'obturation comprenant une partie filetée destinée à venir en prise par vissage avec l'ouverture taraudée du corps principal creux.

Par ailleurs, la vis d'obturation mobile en translation axiale dans le corps principal creux.

Selon l'invention, le dispositif d'évacuation de fluide comprend une butée d'ouverture composée d'un premier moyen de butée monté dans une paroi du corps principal délimitant la chambre d'écoulement et d'un deuxième moyen de butée monté sur la vis d'obturation et situé dans la chambre d'écoulement. En outre, la butée d'ouverture limite la vis d'obturation dans une position extrême d'ouverture où le premier moyen de butée est en contact avec le deuxième moyen de butée et où le canal d'évacuation de fluide est dégagé, le premier moyen de butée monté au travers de la paroi du corps principal est réglable radialement.

Ainsi, grâce à la butée d'ouverture définie selon l'invention, la vis d'obturation est maintenue avec le corps principal tout en restant dans une position d'ouverture dans laquelle le canal d'évacuation est dégagé, ce qui permet l'évacuation du fluide en dehors du contenant de fluide.

Par conséquent, le risque de perte de la vis d'obturation est minimisé, voire supprimé.

En outre, si la vis d'obturation et le corps principal sont endommagés par usure et auquel cas ils se tiennent plus ensemble, la vis d'obturation peut remonter vers la sortie du corps principal à cause des vibrations du moteur. Dans ce cas, la butée empêche que la vis d'obturation sorte complètement en dehors du corps principal pendant cette phase de montée, ce qui évite la perte de cette vis même en temps normal.

De manière avantageuse, ledit premier moyen de butée reste accessible depuis l'extérieur du corps principal ce qui rend apte son montage réversible. Par exemple, le premier moyen de butée peut être avancé ou reculé dans le sens radial par rapport au corps principal afin de s'adapter à la dimension de la vis d'obturation. Le premier moyen de butée peut même être complètement retiré, puis repositionné en cas d'intervention spécifique, comme dans le cas d'un remplacement de la vis d'obturation par exemple. Pour ce faire, le premier moyen de butée peut être du type d'une tige filetée.

Selon une caractéristique de l'invention, le dispositif d'évacuation comprend une butée de fermeture composée d'un troisième moyen de butée monté sur la vis d'obturation et situé dans la chambre d'écoulement et d'un fond de ladite chambre d'écoulement. Par ailleurs, la butée de fermeture limite la vis d'obturation dans une position extrême de fermeture où le troisième moyen de butée est en contact avec le fond de chambre d'écoulement et où le canal d'évacuation de fluide est obturé.

Ainsi, la vis d'obturation reste dans le corps principal, quelle que soit sa position. La vis d'obturation n'est donc jamais séparée du corps principal grâce à la présence de la butée d'ouverture et de la butée de fermeture.

Selon les paragraphes précédents, le deuxième moyen de butée de la butée d'ouverture et le troisième moyen de butée de la butée de fermeture sont montés sur une seule pièce. Ainsi, la pièce sur laquelle se trouvent ces deux moyens de butée est considérée comme une pièce de butée à doubles fonctions. Elle participe à limiter le déplacement de la vis d'obturation par une mise en butée de fermeture et en butée d'ouverture. Il s'agit donc d'un agencement simple à réaliser, peu encombrant et économique.

Selon une caractéristique de l'invention, le canal d'évacuation de fluide est réalisé dans la vis d'obturation. Ce canal comprend une première portion droite axiale s'étendant sur la longueur de la partie filetée et ouverte sur une extrémité libre de la vis d'obturation; et une deuxième portion droite radiale communiquant avec ladite première portion et débouchant sur une paroi latérale de la vis d'obturation via une sortie radiale.

Le canal d'évacuation de fluide ainsi configuré permet une circulation du fluide par l'intérieur de la vis et ensuite une sortie du fluide vers l'extérieur.

Selon les deux derniers paragraphes, lorsque la vis d'obturation est en position extrême de fermeture, la distance entre le premier moyen de butée et le deuxième moyen de butée est supérieure à la distance entre le fond de la chambre d'écoulement et la sortie radiale du canal d'évacuation de fluide.

Alternativement, selon une caractéristique de l'invention, la partie filetée de la vis d'obturation comprend une extrémité libre biseautée annulairement. Dans cette configuration, lorsque la vis d'obturation est en position extrême d'ouverture, le canal d'évacuation de fluide est constitué d'un espace libéré entre l'extrémité libre de la partie filetée et l'ouverture taraudée du corps principal. Il s'agit ici d'un autre mode de réalisation du canal d'évacuation. Ce mode de réalisation est simple à réaliser car il ne requiert pas l'étape d'usinage pour former un canal à l'intérieur de la vis d'obturation.

Selon le paragraphe précédent, lorsque la vis d'obturation est en position extrême de fermeture, la distance entre le premier moyen de butée et le deuxième moyen de butée est supérieure à la distance mesurée entre l'extrémité libre de la vis d'obturation et un niveau de jonction entre une partie supérieure non taraudée et une partie taraudée de l'ouverture taraudée.

Selon une caractéristique de l'invention, un joint d'étanchéité disposé dans un fond de la chambre d'écoulement ou sur la vis d'obturation, notamment contre une deuxième face d'une collerette s'étendant radialement autour de la vis de d'obturation. Le joint d'étanchéité assure une bonne étanchéité au dispositif d'évacuation. La vis d'obturation en position de fermeture extrême vient en appui sur le joint d'étanchéité.

Selon une autre caractéristique de l'invention, le premier moyen de butée est une pièce rapportée dans la chambre d'écoulement. Ainsi, en cas d'endommagement, le premier moyen de butée peut être enlevé du corps principal pour être remplacé par un nouveau premier moyen.

Selon une caractéristique de l'invention, la vis d'obturation comprend une tête d'extrémité située à l'opposé de la partie filetée. Cette tête d'extrémité comprend une empreinte destinée à recevoir une tête d'un outil de vissage et de dévissage. Ainsi, il est simple de manipuler la vis d'obturation à l'aide d'un outil adapté pour régler la vis en position de fermeture ou en position d'ouverture.

L'invention concerne également un procédé de montage d'un ensemble comprenant un contenant de fluide et un dispositif d'évacuation selon l'invention. Précisément, le dispositif d'évacuation comprend la chambre d'écoulement de section circulaire, un joint d'étanchéité se présentant sous forme de rondelle d'étanchéité présentant un diamètre externe légèrement inférieur à celui de la chambre d'écoulement et un diamètre interne sensiblement égal à celui de l'ouverture taraudée. Par ailleurs, le deuxième moyen de butée de la butée d'ouverture et le troisième moyen de butée de la butée de fermeture sont respectivement une première face et une deuxième face d'une collerette s'étendant autour de la vis d'obturation. Parallèlement, le premier moyen de butée de la butée d'ouverture est un rivet ou une tige filetée.

Selon l'invention, le procédé de montage comprend les étapes de :
- réaliser un orifice sur une paroi du contenant de fluide ;
- installer l'ouverture taraudée du corps principal creux en face de l'orifice ;
- souder le corps principal creux au contenant de fluide;
- disposer le joint d'étanchéité dans un fond de la chambre d'écoulement de façon coaxiale avec l'ouverture taraudée ou sur la vis, notamment contre la butée de fermeture ;
- insérer la vis d'obturation dans le corps principal en faisant coïncider la partie filetée de la vis d'obturation avec l'ouverture taraudée du corps principal ;
- visser la vis d'obturation jusqu'à ce que la deuxième face de la collerette vienne en appui sur un épaulement du fond de la chambre d'écoulement ;
- réaliser une ouverture ou un taraudage sur la paroi latérale du corps principal délimitant la chambre d'écoulement ; et
- insérer un rivet ou tige filetée à travers ladite ouverture ou ledit taraudage jusqu'à ce que le rivet ou tige filetée soit au moins partiellement en saillie radialement par rapport à une face interne de la paroi latérale du corps principal.

D'autres caractéristiques et avantages innovants ressortiront de la description ci-après, fournie à titre indicatif et nullement limitatif, en référence aux dessins annexés, dans lesquels :
- la figure 1 représente, de manière schématique, une vue de coupe longitudinale d'un dispositif d'évacuation de fluide de l'invention réalisé selon un premier mode de réalisation, ledit dispositif d'évacuation comprenant une vis d'obturation en position de fermeture ;
- la figure 2 représente la même vue que la figure 1 avec la vis d'obturation en position d'ouverture ;
- la figure 3 représente, de manière schématique, une vue de coupe longitudinale d'un dispositif d'évacuation de fluide de l'invention réalisé selon un deuxième mode de réalisation, ledit dispositif d'évacuation comprenant une vis d'obturation en position de fermeture ;
- la figure 4 représente la même vue que la figure 3 avec la vis d'obturation en position de fermeture.

Les éléments structurellement et fonctionnellement identiques, présents dans plusieurs figures distinctes, sont affectés d'une seule et même référence numérique ou alphanumérique.

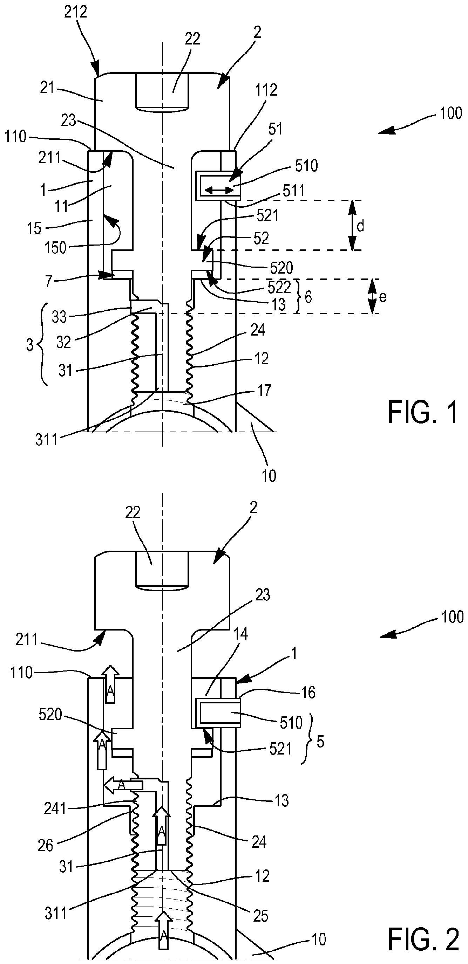

Dans le présent document, sauf indication contraire, les termes « haut », « bas », « inférieur », « supérieur » correspondent au haut et au bas des figures 1 à 4 telles qu'elles sont présentées. Par ailleurs, le terme « vertical » désigne la direction s'étendant de haut en bas des figures 1 à 4. Le terme « horizontal » désigne la direction s'étendant de gauche à droite des figures 1 à 4 et perpendiculaire à la direction verticale.

En référence à la figure 1 et à la figure 2, il est illustré un premier mode de réalisation du dispositif d'évacuation de fluide, ci-après appelé dispositif d'évacuation 100.

Le dispositif d'évacuation 100 est monté sur un contenant de fluide, qui est ici un conduit de liquide 10 appartenant à un circuit de refroidissement d'un véhicule automobile. Le dispositif d'évacuation 100 est ainsi encore appelé dispositif de purge.

Le dispositif d'évacuation 100 comprend un corps principal 1 de section circulaire et de profil sensiblement tubulaire. Le corps principal 1 présente un axe longitudinal L. Le dispositif d'évacuation 100 est installé de manière à ce que l'axe longitudinal L du corps principal 1 soit perpendiculaire à un axe principal (non illustré) du conduit de liquide et à ce que le corps principal 1 se prolonge en saillie par rapport à la périphérie de ce conduit. Le corps principal 1 ainsi disposé reste accessible par le haut et facilite ainsi l'accès au dispositif d'évacuation 100.

Le corps principal 1 est percé de manière à former une chambre d'écoulement 11 et une ouverture taraudée 12. Dans l'exemple illustré, la chambre d'écoulement 11 a un diamètre supérieur à celui de l'ouverture taraudée 12. La chambre d'écoulement 11, de profil cylindrique, est ouverte sur une extrémité supérieure 110 du corps principal 1. Il comprend également un fond 13 situé à peu près à la mi-longueur du corps principal.

L'ouverture taraudée 12 est un passage cylindrique 120 disposé de manière coaxiale avec la chambre d'écoulement 11. L'ouverture taraudée 12 s'étend à partir du fond 13 de la chambre d'écoulement 11 jusqu'à une extrémité inférieure 111 du corps principal 1. L'ouverture taraudée 12 est ouverte sur cette extrémité inférieure 111 du corps principal 1. Dans l'exemple illustré, le passage 120 comprend un taraudage sur toute sa longueur.

Le conduit de liquide 10 comprend un orifice 17 réalisé dans sa paroi latérale 18. Sur les figures 1 et 2, le corps principal 1 est positionné par rapport au conduit de liquide 10 de façon que l'ouverture taraudée 12 soit située au regard l'orifice 17 du conduit 10. Ainsi, l'ouverture taraudée 12 débouche d'une part dans le conduit de liquide 10 et d'autre part dans la chambre d'écoulement 11.

Selon l'invention et dans cet exemple, le dispositif d'évacuation 100 comprend en outre une vis d'obturation 2 qui est disposée en partie à l'intérieur du corps principal 1.

La vis d'obturation 2 comprend une tête d'extrémité 21 comportant une empreinte 22 apte à recevoir une tête d'un outil de vissage et de dévissage. Elle comprend en outre une tige 23 s'étendant en saillie hors de la tête d'extrémité 21 et en direction du conduit de liquide 10. Ici, la tige 23 de la vis est disposée coaxialement avec la tête d'extrémité 21.

La tige 23 comprend une partie filetée 24 qui commence à partir d'une extrémité libre 25 de la tige. La partie filetée 24 est conçue pour venir en prise par vissage avec l'ouverture taraudée 12. La partie filetée 24 a une longueur légèrement inférieure à celle du taraudage 122 de l'ouverture taraudée 12.

Selon le premier mode de réalisation, le dispositif d'évacuation 100 comprend un canal d'évacuation de fluide 3, ci-après appelé canal d'évacuation 3, réalisé dans la vis d'obturation 2. Plus précisément, ce canal 3 est réalisé par perçage dans la partie filetée 24 de la tige 23.

Le canal d'évacuation 3 comprend une première portion droite axiale 31 ouverte sur l'extrémité libre 25 de la tige 2 et disposée de façon coaxiale avec celle-ci. Cette première portion 31 est suivie d'une deuxième portion droite 32 débouchant radialement hors de la tige 31. En d'autres termes, cette deuxième portion droite 32 est ouverte sur une paroi latérale 26 de la tige 23 via une sortie radiale 33.

Ici, la deuxième portion 32, encore appelée deuxième portion droite radiale, est disposée perpendiculairement à la première portion 31. Le canal d'évacuation 3 présente ainsi un profil en forme de L.

Dans l'exemple illustré, le dispositif d'évacuation 100 est un dispositif de purge. Ainsi, le canal d'évacuation 3 est conçu pour évacuer de l'air infiltré dans le conduit de liquide 10. Le canal 3 est encore appelé canal d'évacuation d'air.

Le dispositif d'évacuation 100 comprend également un joint d'étanchéité 7. Ici, le joint d'étanchéité 7 est une rondelle en élastomère qui peut se déformer élastiquement. Le joint d'étanchéité 7 présente un diamètre externe dₑₓₜ inférieur à celui d_{c} de la chambre d'écoulement 11 et un diamètre interne dᵢₙₜ sensiblement égal à celui dₒ de l'ouverture taraudée, et donc à celui de la tige également.

Selon l'invention et dans cet exemple, le dispositif d'évacuation 100 comprend en outre une butée d'ouverture 5 limitant la vis d'obturation 2 dans une position extrême d'ouverture. Dans cette position, le canal d'évacuation 3 est dégagé, ce qui permet l'évacuation de l'air en dehors du conduit de liquide 10. Ainsi, la butée d'ouverture 5 sert de moyen de retenue visant à éviter la séparation de la vis d'obturation 2 du corps principal 1 tout en permettant la sortie de l'air en dehors du conduit de liquide 10.

A cet effet, la butée d'ouverture 5 est composée de deux éléments distincts : un premier moyen de butée 51 monté dans la chambre d'écoulement 11 et un deuxième moyen de butée 52 monté sur la vis d'obturation 2 et situé également dans la chambre d'écoulement 11.

Dans l'exemple illustré, le premier moyen de butée 51 est un élément saillant disposé sur une paroi latérale 15 du corps principal 1 qui délimite la chambre d'écoulement 11. Le premier moyen de butée 51 traverse de part en part la paroi latérale 15. Le montage dudit premier moyen de butée 51 se fait de l'extérieur vers l'intérieur de la chambre d'écoulement 11 qui est délimitée par la paroi latérale 15. Précisément, il s'agit ici d'un rivet ou d'une tige filetée 510 qui dépasse d'une face interne 150 de cette paroi. Pour le montage de la vis d'obturation 2, le rivet ou la tige filetée 510 dépasse d'une distance suffisante pour ne pas gêner le déplacement de la vis d'obturation à l'intérieur du corps principal 1.

Pour installer ce rivet ou cette tige filetée 510 dans le corps principal, une petite ouverture ou taraudage 16 est pratiquée au préalable sur la paroi 15 délimitant la chambre d'écoulement. Le rivet ou cette tige filetée 510 est ensuite inséré(e) à travers cette petite ouverture ou ce taraudage 16 de sorte à être en saillie à l'intérieur de la chambre d'écoulement 11. Le premier moyen de butée 51 ainsi conçu est une pièce distincte du corps principal 1 et qui est rapportée sur celui-ci. L'ouverture ou taraudage 16 étant réalisé sur la paroi latérale 15 du corps principal 1, ledit premier moyen de butée 51 reste accessible depuis l'extérieur, quelle que soit la position de la vis d'obturation 2, ce qui rend apte son retrait ou démontage. Cela procure un avantage en cas de besoin de réparation consistant par exemple en un changement de la vis d'obturation. A titre d'exemple, le retrait dudit premier moyen d'obturation 51 pourrait être réalisé par une opération de perçage dudit premier moyen d'obturation 51 avec un foret de perçage de diamètre approximativement identique à celui de l'ouverture ou taraudage 16.

Quant au deuxième moyen de butée 52, il est monté sur une collerette 520 s'étendant radialement autour de la tige 23. Précisément, le deuxième moyen de butée 52 est la première face 521 de la collerette 520 qui est en regard de la tête d'extrémité 21. La collerette 520 est positionnée légèrement au-dessus de la partie filetée 24 de la vis 2 et située dans la chambre d'écoulement 11, quelle que soit la position de la vis d'obturation 2.

Le dispositif d'évacuation 100 comprend en outre une butée de fermeture 6 limitant la vis d'obturation 2 dans une position extrême de fermeture. Dans cette position, le canal d'évacuation 3 est complètement obstrué. Aucune circulation d'air n'est donc possible. Par ailleurs, en position extrême de fermeture, la vis d'obturation 2 bouche hermétiquement l'ouverture taraudée 12. Ainsi, la butée de fermeture 6 permet d'assurer une étanchéité à air du dispositif d'évacuation 100.

A cet effet, la butée de fermeture 6 comprend le fond 13 de la chambre d'écoulement 11 et un troisième moyen de butée monté sur la vis d'obturation 2 et situé dans la chambre d'écoulement 11.

Dans l'exemple illustré, le troisième moyen de butée est une deuxième face 522, opposée à la première face 521, de collerette 520.

Nous allons maintenant décrire le dispositif d'évacuation 100 avec la vis d'obturation 2 respectivement en position extrême de fermeture (figure 1) et en position extrême d'ouverture (figure 2).

Sur la figure 1, en position extrême de fermeture, la partie filetée 24 de la vis d'obturation 2 est engagée entièrement avec l'ouverture taraudée 12 du corps principal 1. Le canal d'évacuation 3, réalisé dans la partie filetée 24 de la vis, est entouré par l'ouverture taraudée 12 de façon que la sortie radiale 33 dudit canal soit obstruée par une face de taraudage 123 de l'ouverture 12.

Dans cette position, la vis d'obturation 2 est en butée contre le fond 13 de la chambre d'écoulement 11. Précisément, la deuxième face 522 de la collerette 520 est en appui sur le joint d'étanchéité 7 mis dans le fond de la chambre d'écoulement 11. Afin d'assurer une étanchéité à air optimale, la vis d'obturation 2 peut être vissée davantage pour que la collerette 520 vienne écraser le joint d'étanchéité 7 qui se déforme élastiquement.

Par ailleurs, dans l'exemple illustré, lorsque la collerette 520 est en appui sur le joint d'étanchéité 7, une face inférieure 211 de la tête d'extrémité 21 de la vis 2 repose sur un bord supérieur 112 du corps principal 1 de sorte que ladite face 211 couvre entièrement l'ouverture 112 de la chambre d'écoulement 11. La tête d'extrémité 21 constitue ainsi une deuxième barrière d'étanchéité à air pour le dispositif d'évacuation 100.

Le dispositif d'évacuation 100 avec la vis d'obturation 2 en position extrême de fermeture peut résister à un niveau de pression de plusieurs bars, par exemple d'environ 3 bars.

Sur la figure 2, la vis d'obturation 2 est en position extrême d'ouverture. Dans cette position, la première face 521 de la collerette 520 est en appui contre le rivet ou la tige filetée 510 en saillie dans la chambre d'écoulement 11. En d'autres termes, la vis 2 est en butée contre le rivet ou la tige filetée 510 par contact de celui-ci avec la collerette 520.

La partie filetée 24 de la vis 2 est désengagée partiellement de l'ouverture taraudée 12. Plus précisément, une portion supérieure 241 de la partie filetée 24 est décalée par rapport à l'ouverture taraudée 12 et se trouve dans la chambre d'écoulement 11. Cette portion supérieure 241 est la portion où se trouve la sortie radiale 33 du canal d'évacuation 3. La sortie radiale 33 est donc libérée.

Par ailleurs, la tête d'extrémité 21 de la vis d'obturation se trouve dans une position haute, éloignée de l'extrémité supérieure 110 du corps principal 11, ce qui permet de dégager la chambre d'écoulement 11.

De cette manière, lorsque la vis d'obturation 2 est en position extrême d'ouverture, l'air peut circuler de l'intérieur du conduit de liquide 10 vers l'extérieur par le chemin indiqué par les flèches référencées A sur la figure 2. Précisément, l'air à l'intérieur du conduit 10 rentre dans le canal d'évacuation 3 par l'ouverture inférieure 311 de la première portion droite 31 du canal. L'air circule ensuite dans le canal 3 et sort par la sortie radiale 33 de la deuxième portion 32 du canal 3. Etant donné que la chambre d'écoulement 11 est ouverte, l'air, une fois arrivé dans la chambre d'écoulement 11, se dirige vers la sortie donnant sur l'extérieur de ladite chambre 11. L'air est évacué du conduit de liquide 10 et permet ainsi une purge dudit conduit.

Afin de passer de la disposition illustrée sur la figure 1 à celle de la figure 2, il suffit de saisir la vis d'obturation 2 par un outil adapté et de la faire tourner dans un sens où la vis monte vers le haut. Ainsi, la position extrême de fermeture, ici, est encore appelée position en butée basse alors que la position extrême d'ouverture est appelée position en butée haute.

D'un point de vue structurel, quelle que soit la position de la vis d'obturation 2, la sortie radiale 33 est disposée entre la collerette 520 et l'extrémité libre 25 de la tige 23.

Par ailleurs, lorsque la vis d'obturation 2 est en butée basse, la distance d entre le rivet ou tige filetée 510, ou plus exactement le côté inférieur 511 du rivet ou la tige filetée 510, et la première face 521 de la collerette 520 doit être supérieure à la distance e mesurée entre le fond 13 de la chambre d'écoulement 11 et la sortie radiale 33 du canal d'évacuation 3. De cette manière, quand la vis d'obturation 2 change de la position en butée basse à la position en butée haute, la sortie radiale 33 du canal d'évacuation 3 se trouve dans la chambre d'écoulement 11 et elle est ainsi libérée.

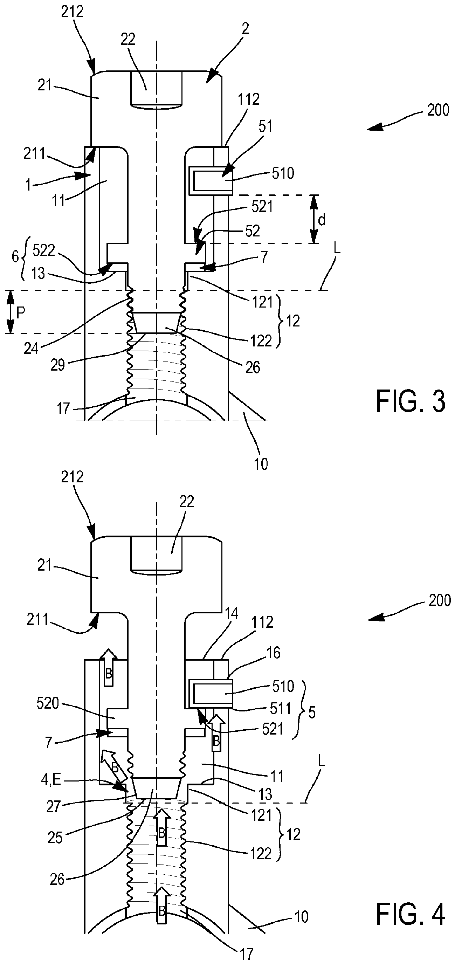

En référence à la figure 3 et à la figure 4, un deuxième mode de réalisation du dispositif d'évacuation 200 est illustré.

Dans ce deuxième mode de réalisation, le dispositif d'évacuation 200 se ressemble essentiellement à celui du premier mode de réalisation.

Le corps principal 1 comprend la chambre d'écoulement 11 et l'ouverture taraudée 12 débouchant dans le conduit de liquide 10. La vis d'obturation 2 comprend la tête d'extrémité 21, la tige 23 s'étendant à partir de la tête d'extrémité 21 vers le bas, et la partie filetée 28 réalisée sur la tige 23 et débutée à partir de l'extrémité libre 25 de celle-ci.

Les butées d'ouverture 5 et de fermeture 6 restent identiques à celles du premier mode de réalisation. La butée d'ouverture 5 comprend la première face 521 de la collerette 520 montée sur la vis d'obturation 2 et le rivet ou la tige filetée 510 en saillie dans la chambre d'écoulement 11. La butée de fermeture 6 comprend la deuxième face 522 de la collerette 520 et le fond 13 de la chambre d'écoulement 11.

Il y a aussi le joint d'étanchéité 7 sous forme de rondelle posé dans le fond 13 de la chambre d'écoulement 11.

Cependant, à la différence du premier mode de réalisation, l'extrémité libre 25 de la tige 23 de la vis d'obturation 2 est biseautée annulairement pour former ainsi un chanfrein d'extrémité 26.

Par ailleurs, le canal d'évacuation n'est pas réalisé dans la vis d'obturation. Dans le deuxième mode de réalisation, le canal d'évacuation 4 est formé à l'extérieur de la vis de façon à permettre une évacuation d'air autour de la vis d'obturation 2 lorsque celle-ci est en position extrême d'ouverture. Le canal d'évacuation 4 sera décrit en détail plus loin dans la description.

Nous allons maintenant décrire le dispositif d'évacuation du deuxième mode de réalisation avec la vis d'obturation respectivement en position extrême de fermeture (figure 3) et en position extrême d'ouverture (figure 4).

En position extrême de fermeture, la vis d'obturation 2 est en butée contre le fond 13 de la chambre d'écoulement 11. Comme dans le premier mode de réalisation, dans cette position, la deuxième face 522 de la collerette 520 est en contact avec le joint d'étanchéité 7. La collerette 520 peut être en appui simple sur le joint d'étanchéité 7 ou l'écraser pour une étanchéité optimale. Aucune sortie d'air n'est possible.

Par ailleurs, la tête d'extrémité 21 de la vis 2 vient se poser sur le bord supérieur 112 du corps principal 1 pour couvrir l'ouverture 14 de la chambre d'écoulement 11. La tête d'extrémité 21 ainsi posée s'ajoute au joint d'étanchéité 7 pour assurer une meilleure étanchéité du dispositif d'évacuation 200.

En position extrême d'ouverture, la vis d'obturation 2 est en butée contre le rivet ou la tige filetée 510. La première face 521 de la collerette 520 touche le rivet ou la tige filetée 510, ce qui empêche la vis d'obturation 2 d'aller plus loin. De la même manière que le premier mode de réalisation, la tête d'extrémité 21 est éloignée du bord supérieur 112 du corps principal 11 afin de laisser libre la chambre d'écoulement 11.

Dans cette position, un espace E est libéré entre l'extrémité libre 25 de la tige, ou plus exactement entre un bord chanfreiné 27 de cette extrémité, et une partie supérieure 121 de l'ouverture taraudée 12. Ici, la partie supérieure 121 est l'épaulement formé entre la chambre d'écoulement 11 et l'ouverture taraudée 12. Cette partie supérieure 121 n'est pas taraudée.

Cet espace E ainsi formé constitue le canal d'évacuation 4 en situation dégagée, c'est-à-dire qu'il crée une communication entre l'ouverture taraudée 12 et la chambre d'écoulement 11. De cette manière, lorsque la vis d'obturation est en position extrême d'ouverture, l'air peut circuler de l'intérieur du conduit de liquide vers l'extérieur par le chemin indiqué par les flèches référencées B sur la figure 4.

L'air circule d'abord dans l'ouverture taraudée 12 selon une direction axiale et puis dévie légèrement dans une direction radiale quand il rentre dans le canal d'évacuation 4. En effet, étant donné que le bord chanfreiné 27 est incliné par rapport à la verticale, l'air suit un chemin orienté radialement de l'ouverture taraudée 12 vers la chambre d'écoulement 11. Une fois que l'air arrive dans la chambre d'écoulement 11, il sort vers l'extérieur par l'ouverture 14 de la chambre d'écoulement 11.

Comme illustré sur la figure 4, dans ce deuxième mode de réalisation, la vis d'obturation 2, en position extrême d'ouverture, est complètement désengagée de l'ouverture taraudée 12. La partie filetée 28 de la vis d'obturation sort complètement de l'ouverture taraudée 12. Or, dans le premier mode de réalisation, la partie filetée 24 de la vis d'obturation, en position extrême d'ouverture, coopère partiellement avec l'ouverture 12.

De la même manière que le premier mode de réalisation, pour passer de la disposition illustrée sur le figure 3 à celle de la figure 4, on saisit la tête 21 de la vis d'obturation 2 par un outil adapté et la fait tourner dans un sens où la vis 2 monte vers le haut jusqu'à ce qu'elle soit en butée contre le rivet ou la tige filetée 510.

Lorsque la vis d'obturation 2 est en position extrême de fermeture, la distance d entre le rivet ou la tige filetée 510 et la première face 521 de la collerette 520 doit être supérieure à la distance p mesurée entre un sommet plat 29 de l'extrémité libre 25 et le niveau de jonction entre la partie supérieure 121 de l'ouverture taraudée et la partie taraudée 122 de ladite ouverture 12. Ce niveau est illustré par le trait pointillé L.

Pour installer le dispositif d'évacuation 100 ou 200 sur le conduit de liquide 10, les étapes à suivre restent les mêmes pour le dispositif du premier et du deuxième mode de réalisation.

Tout d'abord, on réalise un orifice 17 sur le conduit de liquide afin de permettre l'échappement de l'air. Ensuite, on monte un corps principal 1 comme décrit précédemment sur le conduit de liquide 10. Le corps principal 1 reste le même dans les deux modes. Ce corps 1 est mis sur le conduit de liquide 10 avec l'ouverture taraudée 12 disposée en face de l'orifice 17 du conduit. Puis, on fixe le corps principal 1 sur le conduit de liquide 10 par soudage. D'autres moyens pour solidariser les deux pièces ensemble peuvent être envisagés.

On met une rondelle d'étanchéité dans le fond 13 de la chambre d'écoulement 11 de façon coaxiale avec l'ouverture taraudée 12.

Une vis d'obturation 2 selon le premier ou le deuxième mode de réalisation est fournie. On introduit la vis 2 dans le corps principal 11 et engage la partie filetée 24 de la vis 2 avec l'ouverture taraudée 12. On visse jusqu'à ce que la collerette 520 touche le fond 13, ici via la rondelle d'étanchéité . En fonction de la nature de la rondelle et de l'étanchéité à assurer, on peut visser la vis d'obturation 2 jusqu'à l'écrasement de la rondelle d'étanchéité.

On réalise ensuite une petite ouverture 16 sur la paroi latérale 15 du corps principal 1 délimitant la chambre d'écoulement 11. On fait passer un rivet ou une tige filetée 510 à travers cette petite ouverture ou un taraudage 16 jusqu'à ce que le rivet ou la tige filetée 510 soit en saillie par rapport à la face interne 150 de cette paroi. Le rivet ou la tige filetée 510 peut être dimensionné(e) pour que son diamètre soit sensiblement égal à l'ouverture 16 de la paroi 150, ou vice versa pour que ces deux éléments soient maintenus ensemble par friction.

Bien entendu, il est possible d'apporter à l'invention de nombreuses modifications sans pour autant sortir du cadre de celle-ci.

Par exemple, le rivet ou la tige filetée 510 peut être remplacé(e) par un circlips. Dans ce cas, une rainure est réalisée à la face interne 150 de la paroi 15 délimitant la chambre d'écoulement 11. Le circlips vient se loger dans cette rainure de sorte à être en saillie par rapport à la face interne 150.

Le deuxième moyen de butée de la butée d'ouverture et le troisième moyen de butée de la butée de fermeture peuvent être réalisés en deux pièces distinctes.

Le premier moyen de butée 51 peut être réglable radialement par rapport au corps principal 1, comme illustré par la double flèche sur la figure 1.

Dans un autre exemple, la tête d'extrémité 21 de la vis peut remplacer la collerette. Dans ce cas, la tête d'extrémité 21 est située plus bas que le premier moyen de butée 51 de la butée d'ouverture 5. La face supérieure 212 de la tête d'extrémité 21 sert de deuxième moyen de butée 52 de la butée d'ouverture 5 tandis que la face inférieure 211 de ladite tête fait partie de la butée de fermeture 6.

Dans une autre application de l'invention, le dispositif d'évacuation 100 ou 200 peut être utilisé en tant que dispositif de vidange. Dans ce cas, le dispositif d'évacuation 100 ou 200 est installé à l'envers sur un carter d'huile, c'est-à-dire que l'ouverture 112 de la chambre d'écoulement 11 est orientée vers le bas, par exemple en direction du sol. Lorsque la vis d'obturation 2 est en position extrême d'ouverture, l'huile coule vers l'extérieur via le canal d'évacuation 3 ou 4. Pour cette application, le dispositif d'évacuation est encore appelé dispositif de vidange et le contenant de fluide est le carter d'huile.

## Revendications

1. Dispositif d'évacuation de fluide (100 ; 200) pour contenant de fluide (10) comprenant
- un corps principal creux (1) destiné à être rapporté sur le contenant de fluide (10), ledit corps principal (1) comprenant une chambre d'écoulement (11) et une ouverture taraudée (12) communiquant avec ladite chambre d'écoulement (11) et destinée à déboucher dans le contenant de fluide (10) ;
- un canal d'évacuation de fluide (3 ; 4);
- une vis d'obturation (2) comprenant une partie filetée (24) destinée à venir en prise par vissage avec l'ouverture taraudée (12) du corps principal creux (1) ; la vis d'obturation (2) étant mobile en translation axiale dans le corps principal creux (11);
- une butée d'ouverture (5) composée d'un premier moyen de butée (51, 510) monté dans une paroi (15) du corps principal (1) délimitant la chambre d'écoulement et d'un deuxième moyen de butée (52, 521) monté sur la vis d'obturation (2) et situé dans la chambre d'écoulement (11) ;
- la butée d'ouverture (5) limite la vis d'obturation (2) dans une position extrême d'ouverture où le premier moyen de butée (51, 510) est en contact avec le deuxième moyen de butée (521) et où le canal d'évacuation de fluide (3; 4) est dégagé ; ledit dispositif d'évacuation de fluide (100; 200) étant **caractérisé en ce que**
- le premier moyen de butée (51, 510) monté au travers de la paroi (15) du corps principal (1) est réglable radialement.

2. Dispositif (100 ; 200) selon la revendication 1, **caractérisé en ce que**
- le dispositif d'évacuation (100 ; 200) comprend une butée de fermeture (6) composée d'un troisième moyen de butée (522) monté sur la vis d'obturation (2) et situé dans la chambre d'écoulement (11) et d'un fond (13) de ladite chambre d'écoulement (11) ; et
- la butée de fermeture (6) limite la vis d'obturation (2) dans une position extrême de fermeture où le troisième moyen de butée (522) est en contact avec le fond (13) de chambre d'écoulement (11) et où le canal d'évacuation de fluide (3 ; 4) est obturé.

3. Dispositif (100; 200) selon la revendication 2, **caractérisé en ce que** le deuxième moyen de butée (521) de la butée d'ouverture (5) et le troisième moyen de butée (522) de la butée de fermeture (6) sont montés sur une seule pièce (520).

4. Dispositif (100) selon la revendication 2, **caractérisé en ce que** le canal d'évacuation de fluide (3) est réalisé dans la vis d'obturation (2) et comprend
- une première portion droite axiale (31) s'étendant sur la longueur de la partie filetée (24) et ouverte sur une extrémité libre (25) de la vis d'obturation (2); et
- une deuxième portion droite radiale (32) communiquant avec ladite première portion (31) et débouchant sur une paroi latérale (26) de la vis d'obturation (2) via une sortie radiale (33).

5. Dispositif (100) selon la revendication 4, **caractérisé en ce que** lorsque la vis d'obturation (2) est en position extrême de fermeture, la distance (d) entre le premier moyen de butée (51, 510) et le deuxième moyen de butée (521) est supérieure à la distance (e) entre le fond (13) de la chambre d'écoulement (11) et la sortie radiale (33) du canal d'évacuation de fluide (3).

6. Dispositif (200) selon la revendication 2, **caractérisé en ce que**
- la partie filetée (28) de la vis d'obturation (2) comprend une extrémité libre (25, 26) biseautée annulairement ;
- lorsque la vis d'obturation (2) est en position extrême d'ouverture, le canal d'évacuation de fluide (4) est constitué d'un espace (E) libéré entre l'extrémité libre (25, 26) de la partie filetée (28) et l'ouverture taraudée (12) du corps principal (1).

7. Dispositif (200) selon la revendication 6, **caractérisé en ce que** lorsque la vis d'obturation (2) est en position extrême de fermeture, la distance (d) entre le premier moyen de butée (51, 510) et le deuxième moyen de butée (521) est supérieure à la distance (p) mesurée entre l'extrémité libre (25) de la vis d'obturation (2) et un niveau de jonction (L) entre une partie supérieure non taraudée (121) et une partie taraudée (122) de l'ouverture taraudée (12).

8. Dispositif (100; 200) selon l'une des revendications précédentes, **caractérisé en ce qu'**il comprend un joint d'étanchéité (7) disposé dans un fond (13) de la chambre d'écoulement (11), ou sur la vis d'obturation (2), notamment contre une deuxième face (522) d'une collerette (520) s'étendant radialement autour de la vis de d'obturation (2).

9. Dispositif selon (100; 200) l'une des revendications précédentes, **caractérisé en ce que** le premier moyen de butée (51, 510) est une pièce rapportée dans la chambre d'écoulement (11).

10. Procédé de montage d'un ensemble comprenant un contenant de fluide (10) et un dispositif d'évacuation (100 ; 200) selon les revendications 2 à 9 et dans lequel :
- la chambre d'écoulement (11) est de section circulaire,
- le dispositif d'évacuation (100 ; 200) comprend un joint d'étanchéité (7) se présentant sous forme de rondelle d'étanchéité présentant un diamètre externe (dₑₓₜ) légèrement inférieur à celui de la chambre d'écoulement et un diamètre interne (dᵢₙₜ) sensiblement égale à celui de l'ouverture taraudée (12) ;
- le deuxième moyen de butée (52) de la butée d'ouverture (5) et le troisième moyen de butée de la butée de fermeture (6) sont respectivement une première face (521) et une deuxième face (522) d'une collerette (520) s'étendant autour de la vis d'obturation (2) ; et
- le premier moyen de butée (51) de la butée d'ouverture (5) est un rivet ou une tige filetée (510);
ledit procédé de montage étant **caractérisé en ce qu'**il comprend les étapes consistant à:
- réaliser un orifice (17) sur une paroi du contenant de fluide (10) ;
- installer l'ouverture taraudée (12) du corps principal creux (11) en face de l'orifice (17) ;
- souder le corps principal creux (11) au contenant de fluide (10);
- disposer le joint d'étanchéité (7) dans un fond (13) de la chambre d'écoulement (11) de façon coaxiale avec l'ouverture taraudée (12) ou sur la vis (2), notamment contre la butée de fermeture (6);
- insérer la vis d'obturation (2) dans le corps principal (1) en faisant coïncider la partie filetée (24) de la vis d'obturation (2) avec l'ouverture taraudée (12) du corps principal (1);
- visser la vis d'obturation (2) jusqu'à ce que la deuxième face (522) de la collerette (520) vienne en appui sur un épaulement du fond (13) de la chambre d'écoulement ;
- réaliser une ouverture ou un taraudage (16) sur la paroi latérale (15) du corps principal (1) délimitant la chambre d'écoulement (11) ; et
- insérer un rivet ou une tige filetée (510) à travers ladite ouverture ou ledit taraudage (16) jusqu'à ce que le rivet ou une tige filetée (510) soit au moins partiellement en saillie radialement par rapport à une face interne (150) de la paroi latérale (15) du corps principal (1).

11. Véhicule automobile **caractérisé en ce qu'**il comprend un dispositif (100 ; 200) selon l'une des revendications 1 à 9.

## Patentansprüche

1. Fluidabfuhrvorrichtung (100; 200) für einen Fluidbehälter (10), die enthält
- einen Haupthohlkörper (1), der dazu bestimmt ist, auf den Fluidbehälter (10) aufgesteckt zu werden, wobei der Hauptkörper (1) eine Strömungskammer (11) und eine Gewindeöffnung (12) enthält, die mit der Strömungskammer (11) in Verbindung steht und dazu bestimmt ist, in den Fluidbehälter (10) zu münden;
- einen Fluidabfuhrkanal (3; 4);
- eine Verschlussschraube (2), die einen Gewindeteil (24) enthält, der dazu bestimmt ist, durch Verschrauben mit der Gewindeöffnung (12) des Haupthohlkörpers (1) in Eingriff zu kommen; wobei die Verschlussschraube (2) im Haupthohlkörper (11) axial translationsbeweglich ist;
- einen Öffnungsanschlag (5) bestehend aus einer in eine die Strömungskammer begrenzende Wand (15) des Hauptkörpers (1) montierten ersten Anschlageinrichtung (51, 510) und einer zweiten Anschlageinrichtung (52, 521), die auf die Verschlussschraube (2) montiert ist und sich in der Strömungskammer (11) befindet;
- wobei der Öffnungsanschlag (5) die Verschlussschraube (2) in einer Endöffnungsstellung begrenzt, in der die erste Anschlageinrichtung (51, 510) mit der zweiten Anschlageinrichtung (521) in Kontakt ist und in der der Fluidabfuhrkanal (3; 4) freigelegt ist;
wobei die Fluidabfuhrvorrichtung (100; 200) **dadurch gekennzeichnet ist, dass**
- die durch die Wand (15) des Hauptkörpers (1) hindurch montierte erste Anschlageinrichtung (51, 510) radial einstellbar ist.

2. Vorrichtung (100; 200) nach Anspruch 1, **dadurch gekennzeichnet, dass**
- die Abfuhrvorrichtung (100; 200) einen Schließanschlag (6) enthält, der aus einer dritten Anschlageinrichtung (522), die auf die Verschlussschraube (2) montiert ist und sich in der Strömungskammer (11) befindet, und aus einem Boden (13) der Strömungskammer (11) besteht; und
- der Schließanschlag (6) die Verschlussschraube (2) in einer Schließendstellung begrenzt, in der die dritte Anschlageinrichtung (522) mit dem Boden (13) der Strömungskammer (11) in Kontakt ist und wobei der Fluidabfuhrkanal (3; 4) verschlossen ist.

3. Vorrichtung (100; 200) nach Anspruch 2, **dadurch gekennzeichnet, dass** die zweite Anschlageinrichtung (521) des Öffnungsanschlags (5) und die dritte Anschlageinrichtung (522) des Schließanschlags (6) auf ein einziges Bauteil (520) montiert sind.

4. Vorrichtung (100) nach Anspruch 2, **dadurch gekennzeichnet, dass** der Fluidabfuhrkanal (3) in der Verschlussschraube (2) hergestellt ist und enthält
- einen ersten axialen geraden Abschnitt (31), der sich über die Länge des Gewindeteils (24) erstreckt und auf ein freies Ende (25) der Verschlussschraube (2) offen ist; und
- einen zweiten radialen geraden Abschnitt (32), der mit dem ersten Abschnitt (31) in Verbindung steht und über einen radialen Ausgang (33) auf eine Seitenwand (26) der Verschlussschraube (2) mündet.

5. Vorrichtung (100) nach Anspruch 4, **dadurch gekennzeichnet, dass**, wenn die Verschlussschraube (2) in Schließendstellung ist, der Abstand (d) zwischen der ersten Anschlageinrichtung (51, 510) und der zweiten Anschlageinrichtung (521) größer ist als der Abstand (e) zwischen dem Boden (13) der Strömungskammer (11) und dem radialen Ausgang (33) des Fluidabfuhrkanals (3).

6. Vorrichtung (200) nach Anspruch 2, **dadurch gekennzeichnet, dass**
- der Gewindeteil (28) der Verschlussschraube (2) ein ringförmig abgeschrägtes freies Ende (25, 26) enthält;
- wenn die Verschlussschraube (2) in Öffnungsendstellung ist, der Fluidabfuhrkanal (4) aus einem Raum (E) besteht, der zwischen dem freien Ende (25, 26) des Gewindeteils (28) und der Gewindeöffnung (12) des Hauptkörpers (1) freigegeben wird.

7. Vorrichtung (200) nach Anspruch 6, **dadurch gekennzeichnet, dass**, wenn die Verschlussschraube (2) in Schließendstellung ist, der Abstand (d) zwischen der ersten Anschlageinrichtung (51, 510) und der zweiten Anschlageinrichtung (521) größer ist als der gemessene Abstand (p) zwischen dem freien Ende (25) der Verschlussschraube (2) und einem Verbindungsbereich (L) zwischen einem oberen gewindelosen Teil (121) und einem Gewindeteil (122) der Gewindeöffnung (12).

8. Vorrichtung (100; 200) nach einem der vorhergehenden Ansprüche, **dadurch gekennzeichnet, dass** sie eine Dichtung (7) enthält, die in einem Boden (13) der Strömungskammer (11) oder auf der Verschlussschraube (2) angeordnet ist, insbesondere gegen eine zweite Seite (522) eines Kragens (520), der sich radial um die Verschlussschraube (2) erstreckt.

9. Vorrichtung nach (100; 200) einem der vorhergehenden Ansprüche, **dadurch gekennzeichnet, dass** die erste Anschlageinrichtung (51, 510) ein in die Strömungskammer (11) eingesetztes Bauteil ist.

10. Montageverfahren einer einen Fluidbehälter (10) und eine Abfuhrvorrichtung (100; 200) nach den Ansprüchen 2 bis 9 enthaltenden Einheit, bei dem:
- die Strömungskammer (11) einen Kreisquerschnitt hat,
- die Abfuhrvorrichtung (100; 200) eine Dichtung (7) enthält, die in Form einer Dichtungsscheibe vorliegt, die einen Außendurchmesser (dₑₓₜ) geringfügig kleiner als derjenige der Strömungskammer und einen Innendurchmesser (dᵢₙₜ) im Wesentlichen gleich demjenigen der Gewindeöffnung (12) aufweist;
- die zweite Anschlageinrichtung (52) des Öffnungsanschlags (5) und die dritte Anschlageinrichtung des Schließanschlags (6) eine erste Seite (521) bzw. eine zweite Seite (522) eines Kragens (520) sind, der sich um die Verschlussschraube (2) herum erstreckt; und
- die erste Anschlageinrichtung (51) des Öffnungsanschlags (5) ein Niet oder eine Gewindestange (510) ist;
wobei das Montageverfahren **dadurch gekennzeichnet ist, dass** es die Schritte enthält, die darin bestehen:
- eine Öffnung (17) auf einer Wand des Fluidbehälters (10) herzustellen;
- die Gewindeöffnung (12) des Haupthohlkörpers (11) gegenüber der Öffnung (17) anzuordnen;
- den Haupthohlkörper (11) an den Fluidbehälter (10) zu schweißen;
- die Dichtung (7) in einem Boden (13) der Strömungskammer (11) koaxial mit der Gewindeöffnung (12) oder auf der Schraube (2) anzuordnen, insbesondere gegen den Schließanschlag (6);
- die Verschlussschraube (2) in den Hauptkörper (1) einzuführen, indem der Gewindeteil (24) der Verschlussschraube (2) mit der Gewindeöffnung (12) des Hauptkörpers (1) in Übereinstimmung gebracht wird;
- die Verschlussschraube (2) einzuschrauben, bis die zweite Seite (522) des Kragens (520) auf einer Schulter des Bodens (13) der Strömungskammer in Anlage kommt;
- eine Öffnung oder ein Innengewinde (16) auf der Seitenwand (15) des Hauptkörpers (1) herzustellen, die die Strömungskammer (11) begrenzt; und
- einen Niet oder eine Gewindestange (510) durch die Öffnung oder das Innengewinde (16) einzuführen, bis der Niet oder eine Gewindestange (510) mindestens teilweise radial bezüglich einer Innenseite (150) der Seitenwand (15) des Hauptkörpers (1) vorsteht.

11. Kraftfahrzeug, **dadurch gekennzeichnet, dass** es eine Vorrichtung (100; 200) nach einem der Ansprüche 1 bis 9 enthält.

## Claims

1. Fluid evacuation device (100; 200) for a fluid container (10) comprising
- a hollow main body (1) that is designed to be added to the fluid container (10), said main body (1) comprising a flow chamber (11) and a tapped opening (12) that communicates with said flow chamber (11) and is intended to open into the fluid container (10);
- a fluid evacuation duct (3; 4);
- a closure screw (2) comprising a threaded part (24) that is intended to engage by screwing with the tapped opening (12) of the hollow main body (1); the closure screw (2) being able to move in axial translation in the hollow main body (11);
- an opening stop (5) consisting of a first stop means (51, 510) mounted in a wall (15) of the main body (1) delimiting the flow chamber, and of a second stop means (52, 521) mounted on the closure screw (2) and located in the flow chamber (11);
- the opening stop (5) limits the closure screw (2) in a fully open position in which the first stop means (51, 510) is in contact with the second stop means (521) and in which the fluid evacuation duct (3; 4) is left free; said fluid evacuation device (100; 200) being **characterized in that**
- the first stop means (51, 510) mounted through the wall (15) of the main body (1) is radially adjustable.

2. Device (100; 200) according to Claim 1, **characterized in that**
- the evacuation device (100; 200) comprises a closing stop (6) consisting of a third stop means (522) mounted on the closure screw (2) and located in the flow chamber (11), and of a bottom (13) of said flow chamber (11); and
- the closing stop (6) limits the closure screw (2) in a fully closed position in which the third stop means (522) is in contact with the bottom (13) of the flow chamber (11), and in which the fluid evacuation duct (3; 4) is closed.

3. Device (100; 200) according to Claim 2, **characterized in that** the second stop means (521) of the opening stop (5) and the third stop means (522) of the closing stop (6) are mounted on a single component (520).

4. Device (100) according to Claim 2, **characterized in that** the fluid evacuation duct (3) is created in the closure screw (2) and comprises
- a first, axial straight portion (31) extending over the length of the threaded part (24) and open at a free end (25) of the closure screw (2); and
- a second, radial straight portion (32) that communicates with said first portion (31) and opens at a lateral wall (26) of the closure screw (2), via a radial outlet (33).

5. Device (100) according to Claim 4, **characterized in that**, when the closure screw (2) is in the fully closed position, the distance (d) between the first stop means (51, 510) and the second stop means (521) is greater than the distance (e) between the bottom (13) of the flow chamber (11) and the radial outlet (33) of the fluid evacuation duct (3).

6. Device (200) according to Claim 2, **characterized in that**
- the threaded part (28) of the closure screw (2) comprises a free end (25, 26) that has an annular bevel;
- when the closure screw (2) is in the fully open position, the fluid evacuation duct (4) consists of a space (E) that is left free between the free end (25, 26) of the threaded part (28) and the tapped opening (12) of the main body (1).

7. Device (200) according to Claim 6, **characterized in that**, when the closure screw (2) is in the fully closed position, the distance (d) between the first stop means (51, 510) and the second stop means (521) is greater than the distance (p) measured between the free end (25) of the closure screw (2) and a joining level (L) between an untapped upper part (121) and a tapped part (122) of the tapped opening (12).

8. Device (100; 200) according to one of the preceding claims, **characterized in that** it comprises a seal (7) arranged in a bottom (13) of the flow chamber (11), or on the closure screw (2), in particular against a second face (522) of a collar (520) that extends radially around the closure screw (2).

9. Device according to (100; 200) one of the preceding claims, **characterized in that** the first stop means (51, 510) is an added component in the flow chamber (11).

10. Method for mounting an assembly comprising a fluid container (10) and an evacuation device (100; 200) according to Claims 2 to 9, and in which:
- the flow chamber (11) is of circular cross section,
- the evacuation device (100; 200) comprises a seal (7) that takes the form of a sealing washer having an outer diameter (dₑₓₜ) that is slightly smaller than that of the flow chamber, and an inner diameter (dᵢₙₜ) that is essentially equal to that of the tapped opening (12);
- the second stop means (52) of the opening stop (5) and the third stop means of the closing stop (6) are respectively a first face (521) and a second face (522) of a collar (520) that extends around the closure screw (2); and
- the first stop means (51) of the opening stop (5) is a rivet or a threaded rod (510);
said mounting method being **characterized in that** it comprises the steps of:
- creating an orifice (17) on a wall of the fluid container (10);
- installing the tapped opening (12) of the hollow main body (11) facing the orifice (17);
- welding the hollow main body (11) to the fluid container (10);
- arranging the seal (7) in a bottom (13) of the flow chamber (11) coaxially with the tapped opening (12) or on the screw (2), in particular against the closing stop (6) ;
- inserting the closure screw (2) into the main body (1), making the threaded part (24) of the closure screw (2) coincide with the tapped opening (12) of the main body (1);
- driving the closure screw (2) until the second face (522) of the collar (520) comes to bear against a shoulder of the bottom (13) of the flow chamber;
- creating an opening or a tapping (16) on the lateral wall (15) of the main body (1) delimiting the flow chamber (11); and
- inserting a rivet or a threaded rod (510) through said opening or said tapping (16) until the rivet or a threaded rod (510) at least partially projects radially relative to an internal face (150) of the lateral wall (15) of the main body (1).

11. Motor vehicle, **characterized in that** it comprises a device (100; 200) according to one of Claims 1 to 9.
